# EUROPEAN PATENT SPECIFICATION

(11) **EP 4 170 793 B1**
(45) Date of publication and mention of the grant of the patent: **25.03.2026**
(21) Application number: 21880556.2
(22) Date of filing: 14.10.2021
(51) Int. Cl.: H01M 50/24, H01M 50/20, A62C 3/16, H01M 50/383, H01M 50/224, H01M 50/231, A62C 99/00, H01M 50/204, H01M 50/211

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 15.10.2020 KR 20200133763
(43) Date of publication of application: 26.04.2023
(73) Proprietor: LG Energy Solution, Ltd., Seoul 07335 (KR)
(72) Inventor: LEE, Junghoon, Daejeon 34122 (KR); SEONG, Junyeob, Daejeon 34122 (KR); JUNG, Hyemi, Daejeon 34122 (KR); KIM, Kwangmo, Daejeon 34122 (KR); BYOUN, Dayoung, Daejeon 34122 (KR)
(74) Representative: Goddar, Heinz J.
(86) International application number: PCT/KR2021/014280
(87) International publication number: WO 2022/080909

(56) References cited:
- WO-A1-2020/203684
- CN-U- 205 488 293
- CN-U- 211 238 354
- JP-A- 2019 009 084
- JP-B2- 6 315 094
- JP-B2- 6 315 094
- KR-A- 20170 046 330
- KR-B1- 102 149 439

## Description

### Cross-Citation with Related Application(s)

This application claims the benefit of priority based on Korean Patent Application No. 10-2020-0133763 filed October 15, 2020, the contents of which are incorporated as if fully set forth herein.

### [Technical Field]

The present invention relates to a battery module and a battery pack including the same, and more particularly, to a battery module which is capable of simultaneously improving safety and maintaining rigidity of a battery module, and a battery pack including the same.

### [Background]

In modern society, as the use of portable devices, such as mobile phones, notebook computers, camcorders, and digital cameras, has become commonplace, the development of technologies related to the mobile devices has become active. Further, a rechargeable secondary battery is a measure to solve the air pollution of existing gasoline vehicles that use fossil fuels, and is used as a power source for an Electric Vehicle (EV), a Hybrid Electric Vehicle (HEV), a Plug-in Hybrid Electric Vehicle (P-HEV), and the like, so that the need for development of the secondary battery is increasing.

Currently commercialized secondary batteries include nickel cadmium batteries, nickel hydride batteries, nickel zinc batteries, lithium secondary batteries, and the like, and among them, the lithium secondary battery is in the spotlight for its advantages in that charge and discharge are free because of minimal memory effect, a self-discharge rate is very low, and energy density is very high, compared to the nickel-based secondary battery.

The lithium secondary battery mainly uses a lithium-based oxide and a carbon material as a positive electrode active material and a negative electrode active material, respectively. The lithium secondary battery includes an electrode assembly in which a positive electrode plate and a negative electrode plate, to which the positive electrode active material and the negative electrode active material are applied, respectively, are disposed with a separator interposed therebetween, and an exterior material, that is, a battery case, that seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to a shape of the exterior material.

In the case of the secondary batteries used in small devices, two or three battery cells are disposed, but in the case of the secondary batteries used in medium and large devices, such as automobiles, a battery module in which the plurality of battery cells are electrically connected is used. The plurality of battery cells are connected to each other in series or in parallel to form a cell assembly, so that the battery module has improved capacity and output. Further, one or more battery modules may be mounted together with various control and protection systems, such as a Battery Management System (BMS) and a cooling system to form a battery pack.

In the case where the battery pack is configured by connecting the plurality of battery cells in series/in parallel, the battery module formed of at least one battery cell is first configured, and the battery pack is configured by adding other constituent elements by using at least one battery module, which is a general method. The number of battery modules included in the battery pack or the number of battery cells included in the battery module may be variously set according to an output voltage or charge/discharge capacity demanded.

Since it is desirable that the medium and large battery modules are manufactured in a lightweight and thin structure, a prismatic battery, a pouch-type battery, and the like that can be stacked with a high degree of integration and have a small weight and large capacity are mainly used as battery cells of the medium and large battery modules. In the meantime, in order to protect the cell stack from outside shock, heat, or vibration, the battery module may include a frame member which receives the battery cell stack in an interior space while covering upper, lower, left, and right surfaces of the battery cell stack.

Since several battery cells included inside the battery module have a stacked structure, a venting hole structure may be applied to quickly discharge heat and flames to the outside when ignition occurs in the battery module unit. However, in this case, there is a problem in that foreign substances flow into the venting hole, and rigidity of the battery module is decreased due to the application of the venting hole.

Document JP6315094B2 (D1) discloses a battery module in which a cell stack is supported by end plates and a support frame at both longitudinal ends, and holes are formed in a side surface of the housing for discharging gases.

Document WO2020/203684A1 (D2) discloses a structure in which a self-extinguishing layer is interposed between adjacent battery cells.

Document KR102149439B1 (D3) discloses an extinguishing film disposed in contact with cell terminals or arranged in a lattice between cylindrical battery cells within a closed case.

The above information disclosed in this section is only for enhancement of understanding of the background of the invention, and therefore it may contain information that does not form the prior art that is already known in this country to a person of ordinary skill in the art.

### [Summary]

The present invention has been made in an effort to provide a battery module which is capable of effectively discharging heat and flames to the outside when ignition occurs in the battery module, maintaining rigidity of the battery module, preventing inflow of foreign substances, and preventing rapid spread of flames, and a battery pack including the same.

However, the objective of the exemplary embodiments of the present invention is not limited to the foregoing objective, and may be variously extended within the scope of the technical spirit included in the present invention.

An exemplary embodiment of the present invention provides a battery module, including: a battery cell stack including one or more battery cells; and a housing for accommodating the battery cell stack, in which the housing includes a pattern structure in which holes are formed in a repetitive shape in at least one surface, and the battery module further includes an extinguishing sheet disposed between the pattern structure and the battery cell stack.

The pattern structure may be a truss structure in which a shape of the hole is a triangle.

The housing may be made of a metal.

The battery module may further include one pair of end plates disposed at the ends in a longitudinal direction of the battery cell stack, in which the housing may be formed to correspond to four surfaces of the battery cell stack that are not covered by the end plates, and the pattern structure may not be disposed on a surface corresponding to a bottom surface of the battery cell stack among the four surfaces.

The pattern structure may be disposed on one surface of the housing corresponding to an upper surface of the battery cell stack.

The pattern structure may be disposed on the entirety of the one surface of the housing corresponding to the upper surface of the battery cell stack.

The pattern structure may be disposed only on a part of the one surface of the housing corresponding to the upper surface of the battery cell stack.

The pattern structure may be disposed on one surface of the housing corresponding to any one of side surfaces of the battery cell stack.

The extinguishing sheet may include one or more extinguishing agents selected from the group consisting of inorganic carbonates, inorganic phosphates, and inorganic sulfates.

Another exemplary embodiment of the present invention provides a battery pack including: said at least one battery module, and a pack case configured to pack at least one battery module.

According to the exemplary embodiments of the present invention, it is possible to effectively disharge heat and flames to the outside when ignition occurs in a battery module, maintain rigidity of the battery module, prevent foreign substances from being introduced, and simultaneously prevent flame from being rapidly spread.

### [Brief Description of the Drawings]

FIG. 1 is a perspective view of a battery module according to an exemplary embodiment of the present invention.
FIG. 2 is an exploded perspective view of the battery module of FIG. 1.
FIG. 3 is a top view of the battery module of FIG. 1.
FIG. 4 is an exploded perspective view of a battery module according to another exemplary embodiment of the present invention.
FIG. 5 is an exploded perspective view of a battery module according to still another exemplary embodiment of the present invention.

### [Detailed Description]

Hereinafter, the present invention will be described more fully with reference to the accompanying drawings, in which exemplary embodiments of the invention are shown

However, the present invention can be variously implemented and is not limited to the following embodiments.

Accordingly, the drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

Further, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" means positioning on or below the object portion, but does not essentially mean positioning on the upper side of the object portion based on a gravity direction.

In addition, unless explicitly described to the contrary, the word "comprise", and variations such as "comprises" or "comprising", will be understood to imply the inclusion of stated elements but not the exclusion of any other elements.

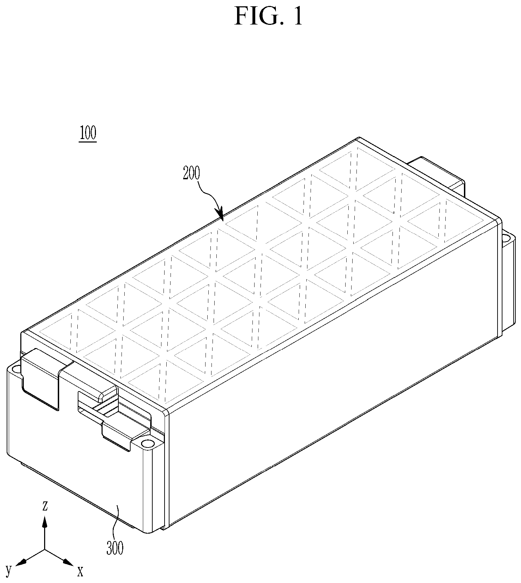

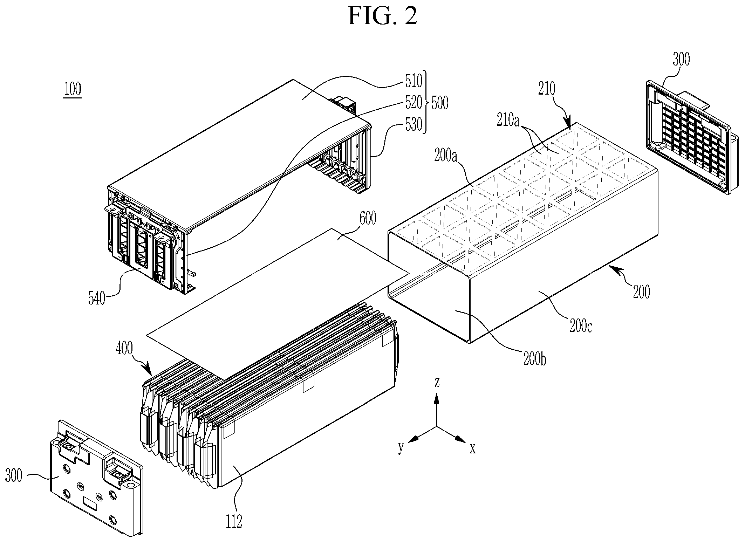

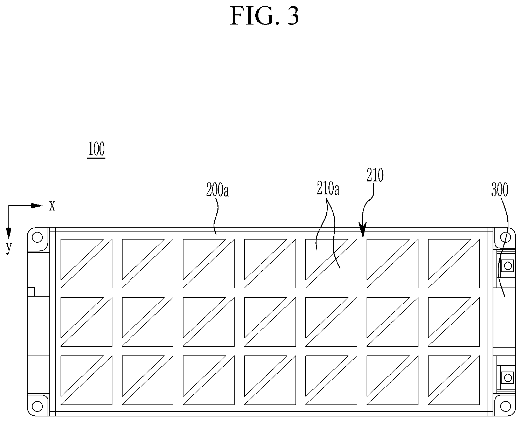

FIG. 1 is a perspective view of a battery module according to an exemplary embodiment of the present invention, FIG. 2 is an exploded perspective view of the battery module of FIG. 1, and FIG. 3 is a top view of the battery module of FIG. 1.

As illustrated in FIGS. 1 to 3, a battery module 100 according to an exemplary embodiment of the present invention includes a battery cell stack 400 including one or more battery cells, a housing 200 for accommodating the battery cell stack 400, and a pair of end plates 300 positioned at both ends of the battery cell stack 400 in a longitudinal direction and coupled to openings of the housing 200.

The battery cell stack 400 is an assembly of secondary batteries including a plurality of battery cells 112. The battery cell stack 400 may include a plurality of battery cells 112, and each battery cell includes an electrode lead. The batter cells 112 may be the pouch-type battery cell having a plate shape, but are not limited thereto. The electrode lead is a positive electrode lead or a negative electrode lead, and an end of the electrode lead of each battery cell 112 may be bent in one direction, and thus, may be in contact with an end of the electrode lead of another adjacent battery cell 112. The two electrode leads which are in contact with each other may be fixed by welding and the like, and thus, the battery cells 112 inside the battery cell stack 400 may be electrically connected.

Further, a bus bar frame 500 accommodated in the housing 200 may be provided together with the battery cell stack 400. The bus bar frame 500 may include an upper frame 510 positioned on an upper portion of the battery cell stack 400, a front fame 520 positioned on a front surface of the battery cell stack 400, and a rear frame 530 positioned on a rear surface of the battery cell stack 400. A bus bar 540 connected with the electrode leads of the battery cells configuring the battery cell stack 400 may be mounted to the front frame 520 and the rear frame 530.

The plurality of battery cells 112 are vertically stacked so that the electrode leads are aligned in one direction to form the battery cell stack 400. The battery cell stack 400 is accommodated in the housing 200 including at least one opening open in the longitudinal direction of the battery cell stack 400. In this case, the electrode leads are withdrawn to the outside of the housing 200 through the opening, and the withdrawn electrode leads are coupled to the front frame 520 and the rear frame 530 of the bus bar frame 500, respectively, to be electrically connected with the mounted bus bar 540. Herein, the bus bar frame 500 may be made of an insulating material, for example, non-conductive synthetic resin, and the bus bar 540 may be made of a conductive metal material.

The battery module 100 may include a Flexible Printed Circuit Board (FPCB) (not illustrated) extended and mounted in the longitudinal direction of the housing 200 in the upper portion of the battery cell stack 400 to sense the battery cell 112. Further, the battery module 100 may include various electronic components, for example, an Internal Circuit Board (ICB) and a Battery Management System (BMS). The electronic components, such as the ICB and the BMS board, may be electrically connected with the plurality of battery cells 112.

In the battery module 100 according to the present exemplary embodiment, the housing 200 may be formed to cover four surfaces, except for both side ends, of the battery cell stack 400. That is, as illustrated in FIG. 2, the battery cell stack 400 may have an upper surface and a bottom surface in the upper portion and the lower portion in the z-axis direction, respectively, and an upper surface 200a of the housing 200 may be located at a position corresponding to the upper surface of the battery cell stack 400 and a lower surface 200b of the housing 200 may be located at a position corresponding to the bottom surface of the battery cell stack 400, and one pair of side surfaces 200c corresponding to the side surfaces of the battery cell stack 400 may be positioned between the upper surface 200a and the lower surface 200b. In this case, the housing 200 may have a rectangular tube shape as illustrated in FIG. 2, but is not limited thereto, and may also have a structure in which a U-shape frame formed of the lower surface 200b and one pair of side surfaces 200c that are vertically coupled to both sides of the lower surface 200b is coupled with an upper plate that is coupled to the U-shape frame to form the upper surface 200a. In addition, the housing 200 may have a structure in which an inverted U-shaped frame formed of the upper surface 200a and both side surfaces 200c is coupled with a lower plate forming the lower surface 200b, but is not particularly limited. Further, although not illustrated, a curve corresponding to the shape of the lower portion of the battery cell 112 included in the battery cell stack 400 is formed inside the lower surface 200b of the housing on which the battery cell stack 400 is seated, thereby more stably supporting the battery cell 112. Further, although not illustrated, a heat conductive resin layer may also be formed between the battery cell stack 400 and the lower surface 200b to discharge heat generating from the battery cells 112.

The housing 200 may be made of a metal material. The metal material may be one or more selected from steel and aluminum. End plates 300 are coupled to each open ends of the housing 200, respectively. The end plate 300 may be made of a metal material to have rigidity to protect the components, such as the battery cell stack 400 and the bus bar frame 500, inside thereof. The end plate 300 made of the metal material may be coupled to the housing 200 which is also made of the metal material, by a method of welding and the like.

The housing 200 may include a pattern structure 210 formed of holes 210a having a repetitive shape on at least one surface. By including the pattern structure 210 in the housing 200 made of the metal material, when an issue, such as ignition, occurs inside the battery module 100, gas may be easily discharged through the holes 210a of the pattern structure 210. That is, the holes 210a of the pattern structure 210 may serve as venting holes. Further, even though the pattern structure 210 including the plurality of holes 210a is formed, the holes 210a have a repetitive shape, thereby maintaining rigidity of the battery module 100. Particularly, the pattern structure 210 may have a truss structure in which the holes 210a have a triangular shape. That is, as illustrated in FIG. 3, in the case where the pattern structure 210 has the truss structure in which a beam made of a metal is connected so that triangular holes 210a are formed, even if external force is applied, the shape of the pattern structure 210 is not changed easily, so that it is possible to maintain rigidity. Accordingly, one surface of the housing 200 (in the present exemplary embodiment, the upper surface 200a) has an open portion that serves as the venting hole, and simultaneously, it is possible to maintain rigidity of the housing 200 by the pattern structure 210.

An extinguishing sheet 600 can be disposed between the pattern structure 210 and the battery cell stack 400. By the disposition of the extinguishing sheet 600, it is possible to prevent foreign substances from being introduced from the outside through the holes 210a of the pattern structure 210. Further, when ignition and the like occur inside the battery module 100, carbon dioxide gas is discharged under thermal runaway conditions by an extinguishing agent included in the extinguishing sheet 600, so that the battery module 100 has a self-extinguishing function capable of suppressing the combustion reaction itself. This may weaken or eliminate the flames, thereby delaying the spread of the flames to the surroundings. Extinguishing agents may be included in the extinguishing sheet 600, and as the extinguishing agent, one or more selected from the group consisting of inorganic carbonates, inorganic phosphates, and inorganic sulfates may be used, but is not particularly limited.

As described above, according to the exemplary embodiment of the present invention, the battery module includes the pattern structure 210 in which the holes 210a are formed in a repetitive shape in at least one surface of the housing 200 and includes the extinguishing sheet 600 disposed between the pattern structure 210 and the battery cell stack 400, so that even though the battery module 100 includes the plurality of holes 210a acting as the vent holes when ignition occurs inside the battery module 100, it is possible to maintain rigidity of the housing 200 and simultaneously prevent foreign substances from being introduced from the outside. Further, it is possible to decrease the speed at which the flames spread by the extinguishing sheet 600, thereby improving safety of the battery module 100.

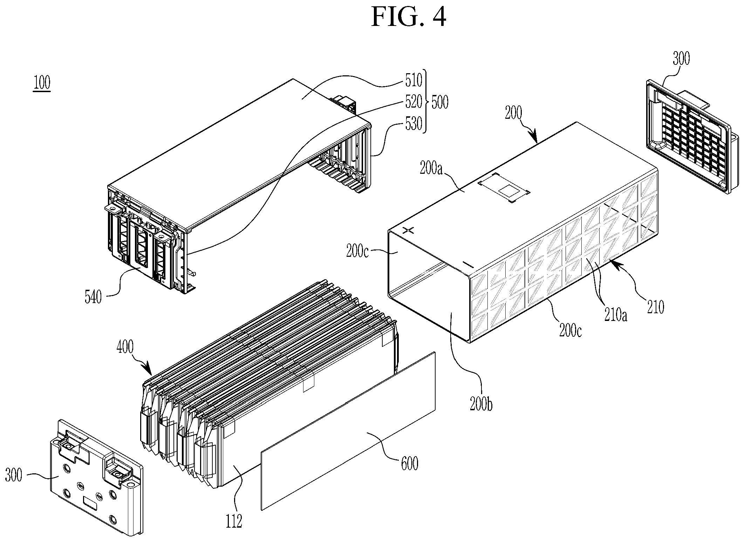

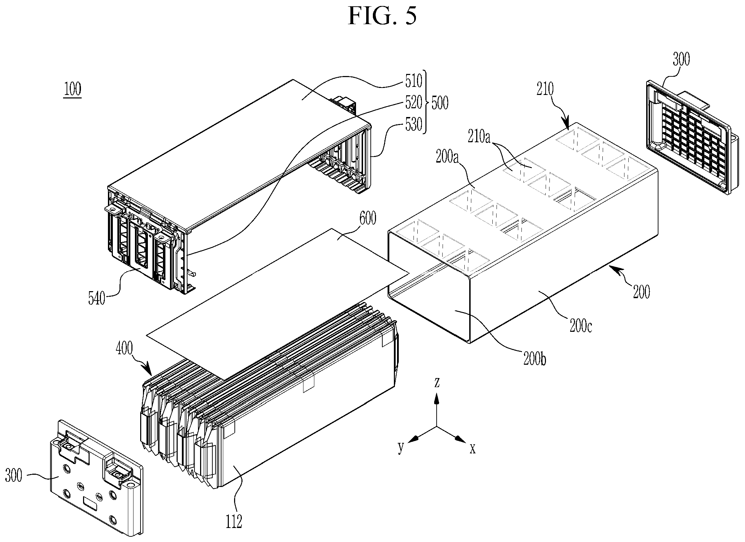

Next, another exemplary embodiment and still another exemplary embodiment will be described with reference to FIGS. 4 and 5.

FIG. 4 is an exploded perspective view of a battery module according to another exemplary embodiment of the present invention, and FIG. 5 is an exploded perspective view of a battery module according to still another exemplary embodiment of the present invention.

As illustrated in FIG. 4, in another exemplary embodiment of the present invention, a pattern structure 210 formed of holes 210a in a repetitive shape is formed in any one of side surfaces 200c of a housing 200. In this case, an extinguishing sheet 600 may be disposed between the side surface 200c in which the pattern structure 210 is formed and a battery cell stack 400. Even in the case where the pattern structure 210 is formed in the side surface 200c as described above, it is possible to maintain rigidity of the housing 200 and simultaneously, the holes 210a included in the pattern structure 210 may act as the vent holes when ignition occurs inside a battery module 100. Further, FIG. 4 illustrates the pattern structure 210 formed only in the side surface 200c, but the pattern structure 210 may be formed in the side surface 200c and an upper surface 200a at the same time, and the pattern structure 210 may be formed in both side surfaces 200c. However, in the case of a lower surface 200b where the battery module 100 is mounted to a battery pack or a device, the lower surface 200b is not suitable for discharging flames and the like to the outside when ignition occurs, so that it is preferable that the pattern structure 210 is formed in the portions except for the lower surface 200b.

Further, as illustrated in FIG. 5, in still another exemplary embodiment of the present invention, a pattern structure 210 formed of holes 210a in a repetitive shape is formed only in a part of an upper surface 200a of a housing 200. That is, as illustrated in FIG. 5, the pattern structure 210 and the portion in which the pattern structure is not formed may be repeated in a stripe shape, and contrary to this, the pattern structure 210 may be applicable only to a center portion of the upper surface 200a. By the foregoing configuration, it is possible to maintain rigidity of the housing 200, and simultaneously the holes 210a included in the pattern structure 210 may act as the vent holes when ignition occurs inside the battery module 100. Further, in this case, an extinguishing sheet 600 may be disposed between the upper surface 200a and a battery cell stack 400. FIG. 5 illustrates that extinguishing sheet 600 corresponds to the whole upper surface 200a, but the present invention is not limited thereto, and any position that can cover all of the holes 210a included in the pattern structure 210 may be appropriately applied.

As described above, according to the exemplary embodiments of the present invention, the battery module includes the pattern structure 210 in which the holes 210a are formed in a repetitive shape in at least one surface of the housing 200 and includes the extinguishing sheet 600 disposed between the pattern structure 210 and the battery cell stack 400, so that it is possible to maintain rigidity of the housing 200 and simultaneously, the holes 210a included in the pattern structure 210 may act as the vent holes when ignition occurs inside the battery module 100, thereby improving safety of the battery module 100. Further, it is possible to decrease the speed of the spread of flames by the extinguishing sheet 600, thereby further improving safety of the battery module 100.

In the meantime, the battery module according to the exemplary embodiment of the present invention may be packed in one or more cases to form a battery pack.

The battery module and the battery pack including the same described above may be applied to various devices. As the device, transport means, such as an electric bicycle, an electric vehicle, and a hybrid vehicle, are applicable, but the present invention is not limited thereto, and the present invention is applicable to various devices capable of using a battery module and a battery pack including the same, which also belongs to the scope of the present invention.

Although exemplary embodiments of the present invention has been described in detail, the scope of the present invention is not limited by the embodiment. Various changes and modifications using the basic concept of the present invention defined in the accompanying claims by those skilled in the art shall be construed to belong to the scope of the present invention.

## Claims

1. A battery module (100), comprising:
battery cell stack (400) including one or more battery cells (112);
a housing (200) for the battery cell stack (400); and
an extinguishing sheet (600),
wherein at least one surface of the housing (200) comprises a pattern structure (210),
wherein the pattern structure (210) comprises a plurality of holes (210a) in a repetitive shape,
wherein the extinguishing sheet (600) is disposed between the pattern structure (210) of the housing (200) and the battery cell stack (400), and
wherein the extinguishing sheet (600) does not comprise any holes.

2. The battery module (100) of claim 1, wherein:
the pattern structure (210) is a truss structure in which each of the plurality of holes (210a) is a triangle.

3. The battery module (100) of claim 1, wherein:
the housing (200) comprises a metal.

4. The battery module (100) of claim 1, further comprising:
a pair of end plates (300) disposed at each respective end in a longitudinal direction of the battery cell stack (400),
wherein the housing (200) is formed on surfaces of the battery cell stack (400) that are not covered by the end plates (300), and
wherein the pattern structure (210) of the housing (200) is not present in a portion of the housing (200) corresponding to a bottom surface (200b) of the battery cell stack (400).

5. The battery module (100) of claim 4, wherein:
the pattern structure (210) is disposed on a surface of the housing (200) corresponding to an upper surface (200a) of the battery cell stack (400).

6. The battery module (100) of claim 5, wherein:
the pattern structure (210) is disposed on the entirety of the surface of the housing (200) corresponding to the upper surface (200a) of the battery cell stack (400).

7. The battery module (100) of claim 5, wherein:
the pattern structure (210) is disposed on a portion of the surface of the housing (200) corresponding to the upper surface (200a) of the battery cell stack (400).

8. The battery module (100) of claim 4, wherein:
the pattern structure (210) is disposed on a surface of the housing (200) corresponding to a side surface (200c) of the battery cell stack (400).

9. The battery module (100) of claim 1, wherein:
the extinguishing sheet (600) includes one or more extinguishing agents selected from the group consisting of inorganic carbonates, inorganic phosphates, and inorganic sulfates.

10. A battery pack comprising:
at least one battery module (100) of claim 1, and
a case configured to accommodate the at least one battery module (100).

## Patentansprüche

1. Batteriemodul (100) aufweisend:
einen Batteriezellenstapel (400) mit einer oder mehreren Batteriezellen (112);
ein Gehäuse (200) für den Batteriezellenstapel (400); und
eine Löschfolie (600),
wobei mindestens eine Oberfläche des Gehäuses (200) eine Musterstruktur (210) aufweist,
wobei die Musterstruktur (210) mehrere Löcher (210a) in einer repetitiven Form aufweist,
wobei die Löschfolie (600) zwischen der Musterstruktur (210) des Gehäuses (200) und dem Batteriezellenstapel (400) angeordnet ist, und
wobei die Löschfolie (600) keinerlei Löcher enthält.

2. Batteriemodul (100) nach Anspruch 1, wobei:
die Musterstruktur (210) eine Fachwerkstruktur ist, in der jedes der mehreren Löcher (210a) ein Dreieck ist.

3. Batteriemodul (100) nach Anspruch 1, wobei:
das Gehäuse (200) ein Metall enthält.

4. Batteriemodul (100) nach Anspruch 1, ferner aufweisend:
ein Paar Endplatten (300), die an jedem jeweiligen Ende in einer Längsrichtung des Batteriezellenstapels (400) angeordnet sind,
wobei das Gehäuse (200) auf Oberflächen des Batteriezellenstapels (400) ausgebildet ist, die nicht von den Endplatten (300) bedeckt sind, und
wobei die Musterstruktur (210) des Gehäuses (200) nicht in einem Abschnitt des Gehäuses (200) vorhanden ist, der einer Bodenfläche (200b) des Batteriezellenstapels (400) entspricht.

5. Batteriemodul (100) nach Anspruch 4, wobei:
die Musterstruktur (210) auf einer Oberfläche des Gehäuses (200) angeordnet ist, die einer oberen Oberfläche (200a) des Batteriezellenstapels (400) entspricht.

6. Batteriemodul (100) nach Anspruch 5, wobei:
die Musterstruktur (210) auf der Gesamtheit der Oberfläche des Gehäuses (200) angeordnet ist, die der oberen Oberfläche (200a) des Batteriezellenstapels (400) entspricht.

7. Batteriemodul (100) nach Anspruch 5, wobei:
die Musterstruktur (210) auf einem Abschnitt der Oberfläche des Gehäuses (200) angeordnet ist, die der oberen Oberfläche (200a) des Batteriezellenstapels (400) entspricht.

8. Batteriemodul (100) nach Anspruch 4, wobei:
die Musterstruktur (210) auf einer Oberfläche des Gehäuses (200) angeordnet ist, die einer Seitenoberfläche (200c) des Batteriezellenstapels (400) entspricht.

9. Batteriemodul (100) nach Anspruch 1, wobei:
die Löschfolie (600) ein oder mehrere Löschmittel enthält, die aus der Gruppe ausgewählt sind, die aus anorganischen Carbonaten, anorganischen Phosphaten und anorganischen Sulfaten besteht.

10. Batteriepack aufweisend:
mindestens ein Batteriemodul (100) nach Anspruch 1, und
ein Gehäuse, das konfiguriert ist, um das mindestens eine Batteriemodul (100) aufzunehmen.

## Revendications

1. Module de batterie (100), comprenant :
un empilement de cellules de batterie (400) comprenant une ou plusieurs cellules de batterie (112) ;
un logement (200) pour l'empilement de cellules de batterie (400) ; et
une tôle d'extinction (600),
au moins une surface du logement (200) comprenant une structure à motif (210),
la structure à motif (210) comprenant une pluralité d'orifices (210a) avec une forme répétitive,
la tôle d'extinction (600) étant disposée entre la structure à motif (210) du logement (200) et l'empilement de cellules de batterie (400), et
la tôle d'extinction (600) étant dépourvue d'orifices.

2. Module de batterie (100) selon la revendication 1,
la structure à motif (210) étant une structure en treillis dans laquelle chacun de la pluralité d'orifices (210a) est un triangle.

3. Module de batterie (100) selon la revendication 1,
le logement (200) comprenant un métal.

4. Module de batterie (100) selon la revendication 1, comprenant en outre :
une paire de flasques (300) disposées à chaque bout respectif dans le sens longitudinal de l'empilement de cellules de batterie (400),
le logement (200) étant formé sur des surfaces de l'empilement de cellules de batterie (400) qui ne sont pas couvertes par les flasques (300), et
la structure à motif (210) du logement (200) n'étant pas présente dans une partie du logement (200) correspondant à une surface inférieure (200b) de l'empilement de cellules de batterie (400).

5. Module de batterie (100) selon la revendication 4,
la structure à motif (210) étant disposée sur une surface du logement (200) correspondant à une surface supérieure (200a) de l'empilement de cellules de batterie (400).

6. Module de batterie (100) selon la revendication 5,
la structure à motif (210) étant disposée sur l'intégralité de la surface du logement (200) correspondant à la surface supérieure (200a) de l'empilement de cellules de batterie (400).

7. Module de batterie (100) selon la revendication 5,
la structure à motif (210) étant disposée sur une partie de la surface du logement (200) correspondant à la surface supérieure (200a) de l'empilement de cellules de batterie (400).

8. Module de batterie (100) selon la revendication 4,
la structure à motif (210) étant disposée sur une surface du logement (200) correspondant à une surface latérale (200c) de l'empilement de cellules de batterie (400).

9. Module de batterie (100) selon la revendication 1,
la tôle d'extinction (600) comprenant un ou plusieurs agents d'extinction sélectionnés dans le groupe composé de carbonates inorganiques, de phosphates inorganiques, et de sulfates inorganiques.

10. Bloc-batterie comprenant :
au moins un module de batterie (100) selon la revendication 1, et
un boîtier configuré pour contenir l'au moins un module de batterie (100).
